# EUROPEAN PATENT APPLICATION

(11) **EP 4 679 345 A1**
(43) Date of publication of application: **14.01.2026**
(21) Application number: 25185474.1
(22) Date of filing: 26.06.2025
(51) Int. Cl.: G06Q 10/10, G10L 15/26, H04L 12/18, H04L 65/403, H04M 3/56, H04N 7/15, G06F 16/438, G06V 20/40

(54) **MEETING MINUTES GENERATION SYSTEM AND METHOD THEREOF, STORAGE MEDIA AND TERMINAL DEVICE**

(30) Priority: 12.07.2024 TW 113126144
(71) Applicant: Optoma Coporation, New Taipei City 231633 (TW)
(72) Inventor: WANG, Sheng-Chih, 231633 NEW TAIPEI CITY (TW); TSUI, Yuan-Mao, 231633 NEW TAIPEI CITY (TW)
(74) Representative: Ter Meer Steinmeister & Partner

(57) **Abstract**

A meeting minutes generation system, a non-transitory processor-readable storage medium, a terminal device, and a meeting minutes generation method thereof are provided. The meeting minutes generation method includes the following. Meeting data is processed and transcript data is generated by a meeting minutes processing module. The transcript data is analyzed to generate meeting minutes data including at least one keyword through the meeting minutes processing module. The meeting minutes data is provided for displaying the meeting minutes data.

## Description

This application claims priority of Taiwan application no. 113126144, filed on July 12, 2024.

### BACKGROUND

### Technical Field

The disclosure relates to a data processing technology that may be executed by a processor, and particularly relates to a meeting minutes generation system, a method thereof, a storage medium, and a terminal device.

### Related Art

Conventional electronic devices merely record and store meeting images and audio, without providing organized key points in the meeting minutes or the function to look up relevant key points in the meeting minutes.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

It is an object to provide a meeting minutes generation system, a method thereof which can automatically generate meeting minutes and provide retrieval functions.

It is a further object to provide a storage medium and a terminal device, which can automatically generate meeting minutes and provide retrieval functions.

The object is solved by the features of the independent claims. Preferred embodiments are given in the dependent claims.

To achieve one or part or all of the above purposes or other purposes, a meeting minutes generation system according to an embodiment of the disclosure includes a cloud server and a terminal device. The cloud server includes a meeting minutes generation apparatus, and the meeting minutes generation apparatus includes a storage medium and a processor. The storage medium stores a meeting minutes processing module. The processor is electrically connected to the storage medium and executes the meeting minutes processing module. The meeting minutes processing module processes meeting data to generate transcript data. The meeting minutes processing module analyzes the transcript data to generate meeting minutes data including at least one keyword. The terminal device is communicatively connected to the cloud server. The terminal device includes a display device, in which the meeting minutes generation apparatus transmits the meeting minutes data to the terminal device, and the display device displays the meeting minutes data.

In one or more embodiments, the meeting data may include meeting image data and/or meeting audio data.

In one or more embodiments, the meeting minutes generation system may further include an image capturing device.

In one or more embodiments, the meeting minutes generation system may be connected to the terminal device in a wired or wireless manner.

In one or more embodiments, the image capturing device may capture meeting images.

In one or more embodiments, the meeting images may include speaker images and slide content images.

In one or more embodiments, the terminal device may generate meeting image data according to the meeting images.

In one or more embodiments, the meeting minutes generation system may include an audio capturing device.

In one or more embodiments, the audio capturing device may be connected to the terminal device in a wired or wireless manner.

In one or more embodiments, the audio capturing device may capture meeting audio.

In one or more embodiments, the terminal device may generate meeting audio data according to the meeting audio.

In one or more embodiments, the meeting minutes processing module may include an image processing module, an audio processing module, an analysis module, and a meeting minutes data generation module.

In one or more embodiments, the image processing module may be used to process the meeting image data to generate first transcript data.

In one or more embodiments, the audio processing module may be used to process the meeting audio data to generate second transcript data.

In one or more embodiments, the analysis module may analyze the first transcript data and the second transcript data to obtain at least one keyword from at least one of the first transcript data and the second transcript data to mark the at least one keyword.

In one or more embodiments, the meeting minutes data generation module may generate meeting minutes data including the at least one keyword according to the first transcript data, the second transcript data, and the at least one keyword.

In one or more embodiments, the analysis module may further obtain at least one keyword according to default information.

In one or more embodiments, the storage medium may further store a retrieval module.

In one or more embodiments, the processor may execute the retrieval module to select one of the at least one keyword according to a retrieval command.

In one or more embodiments, the display device of the terminal device may display associated data corresponding to the one of the at least one keyword.

In one or more embodiments, the associated data may include at least one of image data, audio data, pictures, and website links.

In one or more embodiments, the meeting minutes data may include timeline information.

To achieve one or part or all of the above purposes or other purposes, a meeting minutes generation method according to an embodiment of the disclosure is adapted to a meeting minutes generation apparatus. The meeting minutes generation apparatus executes a meeting minutes processing module to perform the method. The method includes the following. Meeting data is processed and transcript data is generated by the meeting minutes processing module. The transcript data is analyzed to generate meeting minutes data including at least one keyword through the meeting minutes processing module. The meeting minutes data is provided, and the meeting minutes data is displayed.

In one or more embodiments, the meeting data may include meeting image data and/or meeting audio data.

In one or more embodiments, meeting images may be captured through the image capturing device, in which the meeting images include speaker images and slide content images.

In one or more embodiments, the meeting image data may be generated according to the meeting images through the terminal device.

In one or more embodiments, meeting audio may be captured through the audio capturing device.

In one or more embodiments, also, the meeting audio data may be generated according to the meeting audio through the terminal device.

In one or more embodiments, a step of generating the meeting minutes data including the at least one keyword may further include the following.

In one or more embodiments, the meeting image data may be processed to generate first transcript data through the image processing module.

In one or more embodiments, the meeting audio data may be processed to generate second transcript data through the audio processing module.

In one or more embodiments, through the analysis module, the first transcript data and the second transcript data may be analyzed to obtain the at least one keyword from at least one of the first transcript data and the second transcript data, and the at least one keyword is marked.

In one or more embodiments, the meeting minutes data including the at least one keyword may be generated according to the first transcript data, the second transcript data, and the at least one keyword through the meeting minutes data generation module.

In one or more embodiments, the at least one keyword may be obtained and marked according to the default information through the analysis module.

In one or more embodiments, one of the at least one keyword may be selected according to the retrieval command through the retrieval module, and the associated data corresponding to the one of the at least one keyword is displayed.

In one or more embodiments, the associated data may include at least one of image data, audio data, pictures, and website links.

In one or more embodiments, the meeting minutes data may include the timeline information.

To achieve one or part or all of the above purposes or other purposes, a non-transitory processor-readable storage medium according to an embodiment of the disclosure stores a meeting minutes processing module, and the meeting minutes processing module is accessed by a processor to execute the following steps. The meeting data is processed and the transcript data is generated. The transcript data is analyzed to generate the meeting minutes data including the at least one keyword. The meeting minutes data is provided to the display device to display the meeting minutes data.

To achieve one or part or all of the above purposes or other purposes, a terminal device according to an embodiment of the disclosure includes an input device, a display device, a storage medium, and a processor. The storage medium stores a meeting minutes processing module. The processor is electrically connected to the input device, the storage medium, and the display device, and is used to execute the meeting minutes processing module. The meeting minutes processing module is used to process meeting data to generate transcript data, and the meeting minutes processing module analyzes the transcript data to generate meeting minutes data including at least one keyword. The display device displays the meeting minutes data.

Based on the above, the meeting minutes generation system, the method thereof, the storage medium, and the terminal device of the disclosure can generate the transcript data respectively according to the meeting image data and the meeting audio data, and can generate the meeting minutes data including the at least one keyword according to the transcript data, which may be available for searching.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

FIG. 1 is a schematic diagram of a meeting minutes generation system of an embodiment.
FIG. 2 is a schematic diagram of multiple modules of a storage medium of an embodiment.
FIG. 3 is a flowchart of a meeting minutes generation method of an embodiment of the disclosure.
FIG. 4 is a flowchart of establishing meeting minutes data of an embodiment of the disclosure.
FIG. 5 is a flowchart of reading and retrieving the meeting minutes data of an embodiment.
FIG. 6 is a schematic diagram of a meeting image of an embodiment of the disclosure.
FIG. 7 is a schematic diagram of the meeting minutes data of an embodiment of the disclosure.
FIG. 8 is a schematic diagram of a terminal device according to an embodiment of the disclosure.

### DESCRIPTION OF THE EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including", "comprising" , "having" and variations thereof herein is meant to encompass the items listed thereafter and equivalents thereof as well as additional items. Unless limited otherwise, the terms "connected", "coupled" , "mounted" and variations thereof herein are used broadly and encompass direct and indirect connections, couplings, and mountings.

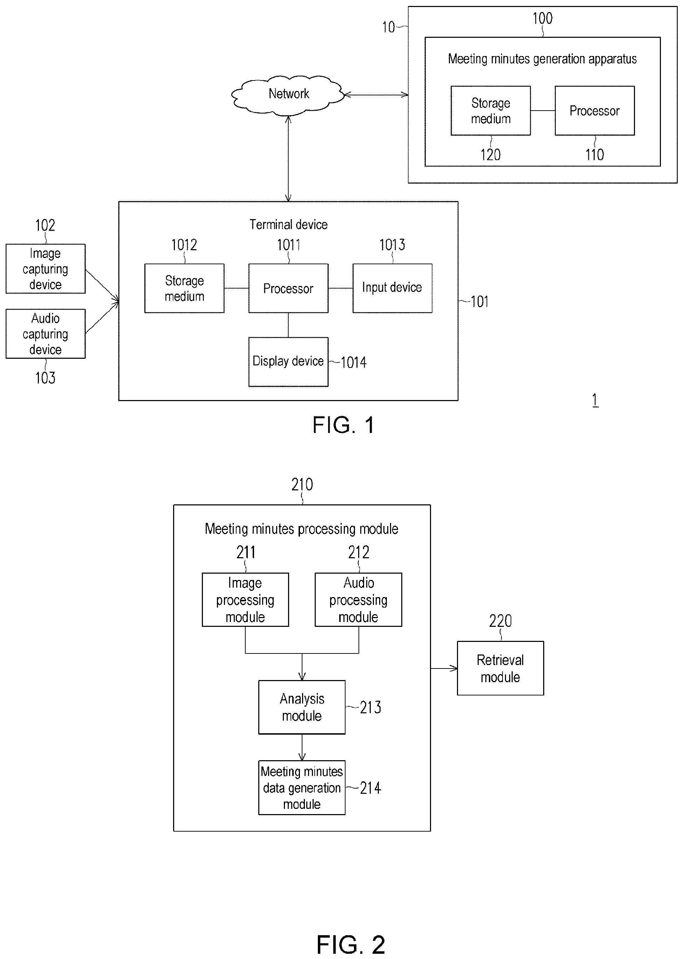

FIG. 1 is a schematic diagram of a meeting minutes generation system according to an embodiment of the disclosure. Referring to FIG. 1, a meeting minutes generation system 1 includes a meeting minutes generation apparatus 100. The meeting minutes generation apparatus 100 may be a computing device. The meeting minutes generation apparatus 100 includes at least one processor 110 and at least one storage medium 120. The processor 110 is electrically connected to the storage medium 120. In this embodiment, the meeting minutes generation apparatus 100 may receive meeting data and generate corresponding meeting minutes data for subsequent keyword searching. It should be noted that electrical connection refers to the transmission of electrical signals between two electronic components.

In this embodiment, the meeting minutes generation apparatus 100 may be located in a cloud server 10, but the disclosure is not limited thereto. In this embodiment and other embodiments below, the processor 110 may include, for example, a Central Processing Unit (CPU) with image data processing capabilities, or other programmable general-purpose or special-purpose microprocessors, an Image Processing Unit (IPU), a Graphic Processing Unit (GPU), a Digital Signal Processor (DSP), an Application Specific Integrated Circuit (ASIC), a Programmable Logic Device (PLD), other similar computing circuits, or combinations of these circuits. The storage medium 120 may include, for example, any type of Hard Disk Drive (HDD), non-volatile memory (such as SSD or flash memory), Dynamic Random Access Memory (DRAM), Static Random Access Memory (SRAM), and non-transitory processor-readable storage media, and is used to store various modules and data mentioned in the embodiments of the disclosure. The modules mentioned in the specification are at least one different programs or software. The various modules include, for example, a meeting minutes processing module and a retrieval module. In an embodiment, the storage medium 120 is, for example, a non-transitory processor-readable storage medium that may store at least one module. The at least one module may be accessed and executed by the processor 110 to perform the meeting minutes generation method described in various embodiments of the disclosure.

FIG. 2 is a schematic diagram of multiple modules in the storage medium according to an embodiment of the disclosure. Referring to FIG. 1 and FIG. 2, the storage medium 120 may store a meeting minutes processing module 210 and a retrieval module 220, and may obtain meeting data from external audio and video sources, but the disclosure is not limited thereto. The meeting data may include meeting image data and meeting audio data. In this embodiment, the meeting minutes generation system 1 may further include a terminal device 101, an image capturing device 102, and an audio capturing device 103, in which the terminal device 101 includes, for example, a processor 1011, a storage medium 1012, an input device 1013, and a display device 1014. The processor 1011 is electrically connected to the storage medium 1012, the input device 1013, and the display device 1014 respectively. The terminal device 101 is communicatively connected to the cloud server 10 with the meeting minutes generation apparatus 100 through a network. The image capturing device 102 and the audio capturing device 103 may be connected to the terminal device 101 in a wired or wireless manner. The image capturing device 102 may include, for example, a video camera or web camera. The audio capturing device 103 may include, for example, a microphone. The image capturing device 102 may be used to capture meeting images. The meeting images include speaker's images and slide content images displayed on the display device 1014 in the meeting. The audio capturing device 103 may be used to capture meeting audio generated in the meeting. The image capturing device 102 transmits the meeting images to the terminal device 101. The audio capturing device 103 transmits the meeting audio to the terminal device 101. Through commands input by the input device 1013, the processor 1011 of the terminal device 101 executes an image processing program stored in the storage medium 1012, and generates meeting image data according to the meeting images. Also, the processor 1011 of the terminal device 101 executes an audio processing program stored in the storage medium 1012 to generate meeting audio data according to the meeting audio. Through commands input by the input device 1013, the processor 1011 of the terminal device 101 transmits the meeting data including meeting image data and meeting audio data to the meeting minutes generation apparatus 100 of the cloud server 10 through the network.

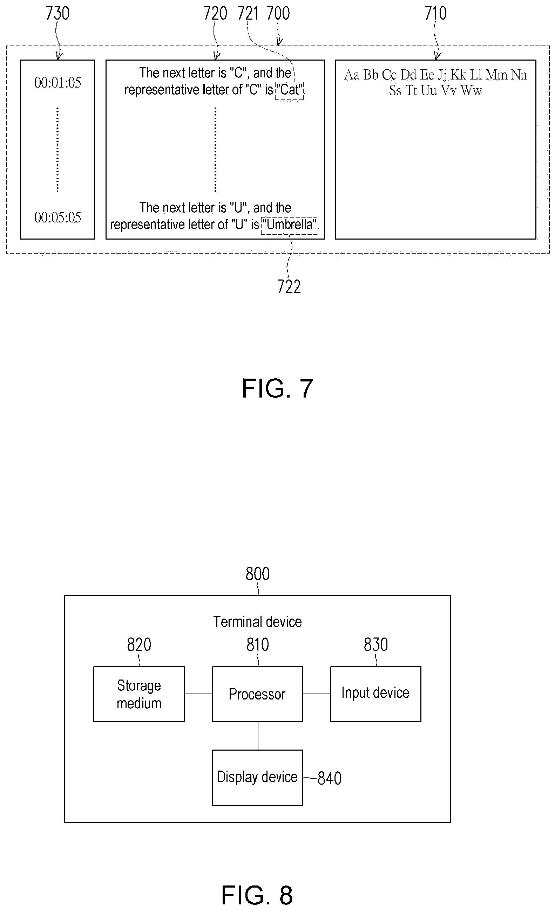

In an embodiment, the terminal device 101 itself includes the image capturing device 102 and the audio capturing device 103, which are electrically connected to the processor 1011 respectively. The storage medium 1012 stores a video conferencing program. A terminal device 800 in FIG. 8 may also have the same hardware and software as the terminal device 101. The processor 1011 of the terminal device 101 may execute the video conferencing program, and the video conferencing program is, for example, Microsoft Teams or Zoom video program. Also, the processor 1011 of the terminal device 101 may capture meeting images and meeting audio during the execution of the video conferencing program. Through commands input by the input device 1013, the processor 1011 of the terminal device 101 executes an image processing program stored in the storage medium 1012, and generates meeting image data according to the meeting images. Also, the processor 1011 of the terminal device 101 executes an audio processing program stored in the storage medium 1012 to generate meeting audio data according to the meeting audio. Through commands input by the input device 1013, the processor 1011 of the terminal device 101 transmits the meeting data including meeting image data and meeting audio data to the meeting minutes generation apparatus 100 of the cloud server 10 through the network.

The terminal device 101 may be, for example, an Interactive Flat Panel (IFP), a smart phone, a Personal Computer (PC), a laptop computer, a tablet, or a related electronic device with computing capabilities. The processor 1011 and the storage medium 1012 are similar to the processor 110 and the storage medium 120 described above. The input device 1013 may be, for example, a mouse, a keyboard, or a touch panel. The display device 1014 may be, for example, a Liquid Crystal Display (LCD) panel and a Light Emitting Diode (LED) Display.

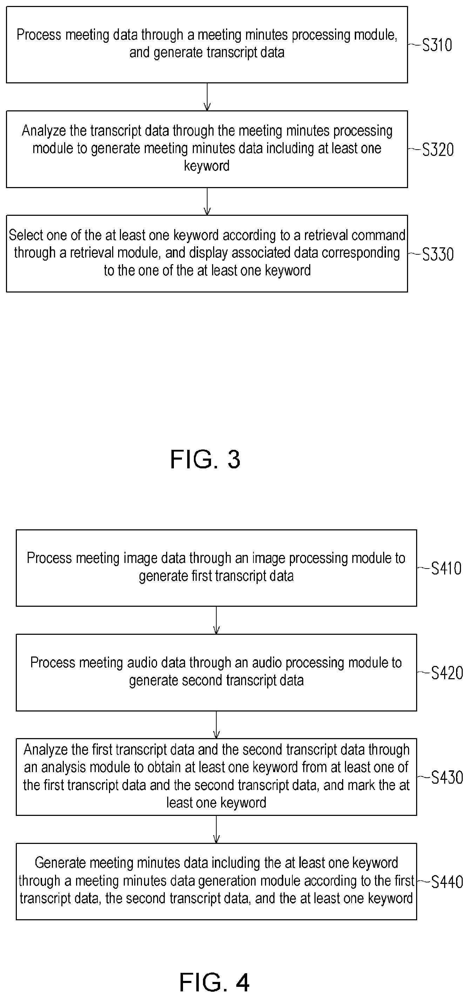

FIG. 3 is a flowchart of a meeting minutes generation method according to an embodiment of the disclosure. Referring to FIG. 1 to FIG. 3, the processor 110 of the meeting minutes generation apparatus 100 receives meeting data and executes the meeting minutes processing module 210 and the retrieval module 220 to perform the following Steps S310 to S330. In Step S310, the processor 110 may process the meeting data through the meeting minutes processing module 210 and generate transcript data. In this embodiment, the meeting minutes processing module 210 may convert the meeting image data and the meeting audio data into transcript data. In Step S320, the processor 110 may analyze the transcript data through the meeting minutes processing module 210 to generate meeting minutes data including at least one keyword. In this embodiment, the meeting minutes processing module 210 may automatically determine and mark keywords in the meeting minutes data. In Step S330, the processor 110 may select one of the at least one keyword according to the retrieval command through the retrieval module 220, and the display device1014 may display associated data corresponding to the one of the at least one keyword. In this embodiment, the meeting minutes data may be transmitted by the meeting minutes generation apparatus 100 to the terminal device 101, and the display device 1014 of the terminal device 101 displays the meeting minutes data. The user searches or clicks on the at least one keyword in the meeting minutes data through the input device 1013, so that the display device 1014 of the terminal device 101 displays the associated data corresponding to the one of the at least one keyword.

FIG. 4 is a flowchart of establishing the meeting minutes data according to an embodiment of the disclosure. Referring to FIG. 2 and FIG. 4, specifically, the meeting minutes processing module 210 may further include an image processing module 211, an audio processing module 212, an analysis module 213, and a meeting minutes data generation module 214. The meeting minutes processing module 210 may execute the following Steps S410 to S440. In Step S410, the image processing module 211 may process the meeting image data to generate first transcript data. The first transcript data has a first timeline, and the first transcript data is sorted according to the first timeline. In this embodiment, the image processing module 211 may perform image recognition to recognize the text content appearing in the image, generate the first transcript data, and exclude people or objects appearing in the image. In Step S420, the audio processing module 212 may process the meeting audio data to generate second transcript data. The second transcript data has a second timeline, and the second transcript data is sorted according to the second timeline. In this embodiment, the audio processing module 212 may perform human voice recognition to recognize the text content appearing in the audio and generate the second transcript data. The transcript data includes at least one of the first transcript data and the second transcript data.

In Step S430, the analysis module 213 may analyze the first transcript data and the second transcript data to obtain the at least one keyword from at least one of the first transcript data and the second transcript data, and mark the at least one keyword. In this embodiment, the analysis module 213 corresponds the first timeline of the first transcript data with the second timeline of the second transcript data, so that the first transcript data and the second transcript data have the same timeline. The analysis module 213 may obtain at least one keyword according to default information and mark the at least one keyword. That is, the analysis module 213 determines that at least one text in the first transcript data and the second transcript data meets conditions of the default information, and the at least one text meeting the conditions of the default information serves as the at least one keyword. The default information may be the classification of meeting content, and/or conditions such as the frequency or number of times the text appears in a sentence. For example, the meeting content is classified as an alphabet teaching course, and the frequency or number of times the letters appear repeatedly is used as the default information. The analysis module 213 obtains at least one keyword according to the above-mentioned default information.

In Step S440, the meeting minutes data generation module 214 may generate meeting minutes data including at least one keyword according to the first transcript data, the second transcript data, and the at least one keyword. In this embodiment, the meeting minutes data generation module 214 may combine the first transcript data and the second transcript data according to the common timeline of the first transcript data and the second transcript data, and store the information of the at least one keyword marked to generate meeting minutes data including at least one keyword. The meeting minutes data including the at least one keyword may be stored in the storage medium 120.

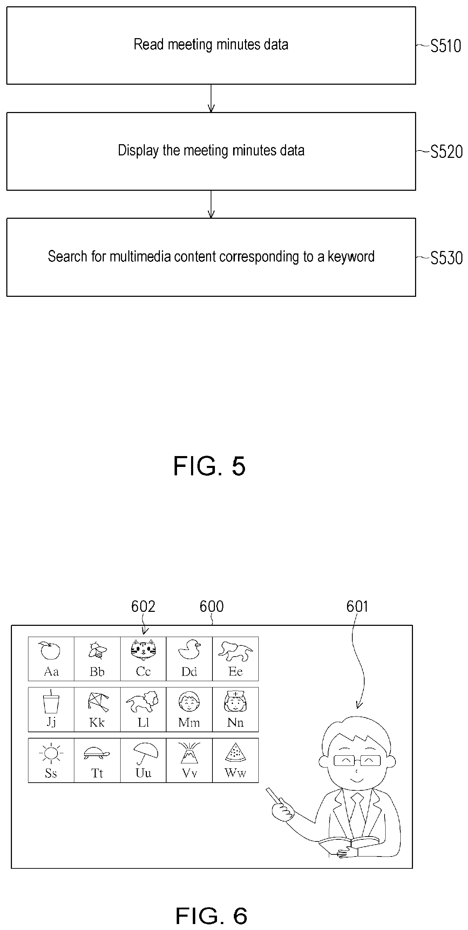

FIG. 5 is a flowchart of reading and retrieving the meeting minutes data according to an embodiment of the disclosure. Referring to FIG. 1, FIG. 2, and FIG. 5, specifically, a user connects to the meeting minutes generation apparatus 100 through the terminal device 101 to obtain the meeting minutes data. The user implements the following Steps S510 to S530 through commands input by the input device 1013 of the terminal device 101. In Step S510, the processor 1011 of the terminal device 101 reads the previously stored meeting minutes data including the at least one keyword from the storage medium 120. In Step S520, the meeting minutes data is displayed through the display device 1014 of the terminal device 101, in which the meeting minutes data includes at least one of the first transcript data and second transcript data.

In Step S530, the retrieval module 220 may search for multimedia content corresponding to the keyword according to the marked keyword clicked by the user. In this embodiment, the retrieval module 220 may automatically connect to a website for the clicked marked keyword, where the website has associated data corresponding to the keyword, or automatically connect to a database, where the database stores associated data corresponding to the keyword. The associated data may include at least one of image data, audio data, pictures, or website links. Through the retrieval module 220, the display device 1014 of the terminal device 101 displays the associated data corresponding to the keyword.

In an embodiment, at least one of the meeting minutes processing module 210 and the retrieval module 220 may include an Artificial Intelligence (AI) model, in which the meeting minutes processing module 210 may be a Large Language Model (LLM), but the disclosure is not limited thereto.

FIG. 6 is a schematic diagram of a meeting image according to an embodiment of the disclosure. FIG. 7 is a schematic diagram of the meeting minutes data according to an embodiment of the disclosure. Referring to FIG. 1, FIG. 2, FIG. 6, and FIG. 7, for example, the meeting image of various embodiments of the disclosure may be a meeting image 600 as shown in FIG. 6. The meeting image 600 is, for example, a teaching image. In a certain time interval, the meeting image 600 may include a teacher image (speaker image) 601 and a teaching content image (slide content image) 602. The meeting minutes processing module 210 may analyze the meeting image 600 and the meeting audio in the same time interval to generate meeting minutes data 700 as shown in FIG. 7. The meeting minutes data 700 includes first transcript data 710, second transcript data 720, and corresponding timeline information 730.

Specifically, the image processing module 211 may analyze the meeting image data to generate the first transcript data 710 as shown in FIG. 7. Additionally, the audio processing module 212 may analyze the meeting audio data corresponding to the same time interval to generate the second transcript data 720 as shown in FIG. 7. In this embodiment, the analysis module 213 may analyze the first transcript data 710 and the second transcript data 720. Furthermore, the analysis module 213 may mark keywords 721, 722 in the second transcript data 720 of the meeting minutes data 700 according to pre-input teaching information (default information). The keyword 721 is, for example, "Cat", and the keyword 722 is, for example, "Umbrella". The keywords 721 and 722 are related to the teaching course. Therefore, the meeting minutes data generation module 214 may store the meeting minutes data 700 including the marked keywords 721, 722.

When the user reviews the meeting minutes data 700, the display device 1014 of the terminal device 101 displays the first transcript data 710, the second transcript data 720 including the marked keywords 721, 722, and the corresponding timeline information 730. When the user, for example, clicks on the keywords 721, 722, the retrieval module 220 may automatically retrieve associated data corresponding to the keywords 721, 722 (for example, a picture of a cat or a picture of an umbrella). The display device 1014 of the terminal device 101 displays a page presenting the associated data corresponding to the keywords 721, 722. In this way, the learning memory of the user can be effectively enhanced.

FIG. 8 is a schematic diagram of the terminal device according to an embodiment of the disclosure. Referring to FIG. 8, the related hardware of the terminal device 800 is similar to the terminal device 101 in FIG. 1. The meeting minutes generation system 1 may include the terminal device 800. The terminal device 800 includes a processor 810, a storage medium 820, an input device 830, and a display device 840. The processor 810 is electrically connected to the storage medium 820, the input device 830, and the display device 840 respectively. In this embodiment, the meeting minutes generation apparatus 100 in FIG. 1 may be installed on the terminal device 800 in FIG. 8. The processor 810 and the storage medium 820 may be the meeting minutes generation apparatus 100.

In this embodiment, the storage medium 820 may store the meeting minutes processing module and the retrieval module as described in the foregoing embodiments. The processor 810 may execute the meeting minutes processing module and the retrieval module to implement the meeting minutes generation method. The meeting minutes processing module may process the meeting data to generate transcript data, and the meeting minutes processing module may analyze the transcript data to generate meeting minutes data including at least one keyword. In this embodiment, the display device 840 may display the meeting minutes data, and the processor 810 may receive the retrieval command through the input device 830. The retrieval module may select one of the at least one keyword according to the retrieval command, and the display device 840 may display associated data corresponding to the one of the at least one keyword. Therefore, the terminal device 800 may effectively establish the meeting minutes data and realize an effective meeting minutes search function.

Regarding the related meeting minutes generation method and technical details of the terminal device 800 of this embodiment, sufficient teaching, suggestions, and implementation instructions may be obtained by referring to the descriptions of the embodiments of FIG. 1 to FIG. 7, so details will not be repeated here.

In summary, the technical problem to be solved by the disclosure is how to effectively record the images and audio of a meeting, automatically generate corresponding transcript data, accurately obtain keywords from the transcript data, and mark the keywords to present in the meeting minutes data through the meeting minutes generation system, the terminal device, the storage medium, and the method thereof. The meeting minutes generation system, the storage medium, the terminal device, and the method thereof according the disclosure can analyze the transcript data to automatically mark at least one keyword, and can generate the meeting minutes data including the at least one keyword. The meeting minutes generation system, the method thereof, the storage medium, and the terminal device of the disclosure may provide a keyword search function for the meeting minutes data, and can automatically generate associated data corresponding to the keyword.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the disclosure is intended to be dedicated to the public regardless of whether the element or component is explicitly recited in the following claims.

## Claims

1. A meeting minutes generation system (1), comprising a cloud server (10) comprising a meeting minutes generation apparatus (100), wherein the meeting minutes generation apparatus (100) comprises:
a storage medium (120) for storing a meeting minutes processing module (210); and
a processor (110) electrically connected to the storage medium (120), and configured to execute the meeting minutes processing module (210),
wherein the meeting minutes processing module (210) is configured to process meeting data to generate transcript data and to analyze the transcript data to generate meeting minutes data comprising at least one keyword; and
a terminal device (101) communicatively connected to the cloud server (10), wherein the terminal device comprises a display device (1014),
wherein the meeting minutes generation apparatus (100) is configured to transmit the meeting minutes data to the terminal device (101), and the display device (1014) is configured to display the meeting minutes data.

2. The meeting minutes generation system as claimed in claim 1, wherein the meeting data comprises meeting image data and meeting audio data.

3. The meeting minutes generation system as claimed in claim 1 or 2, further comprising an image capturing device (102) connected to the terminal device (101) in a wired or wireless manner,
preferably the image capturing device (102) is configured to capture a meeting image, the meeting image comprises a speaker image and a slide content image, and
the terminal device (101) is configured to generate the meeting image data according to the meeting image.

4. The meeting minutes generation system as claimed in any one of the preceding claims, further comprising an audio capturing device (103) connected to the terminal device (101) in a wired or wireless manner,
preferably the audio capturing device (103) is configured to capture meeting audio, and the terminal device (101) is configured to generate the meeting audio data according to the meeting audio.

5. The meeting minutes generation system as claimed in claim 4, wherein the meeting minutes processing module (210) comprises:
an image processing module (211) configured to process the meeting image data to generate first transcript data;
an audio processing module (212) configured to process the meeting audio data to generate second transcript data;
an analysis module (213) configured to analyze the first transcript data and the second transcript data to obtain the at least one keyword from at least one of the first transcript data and the second transcript data to mark the at least one keyword; and
a meeting minutes data generation module (214) configured to generate the meeting minutes data comprising the at least one keyword according to the first transcript data, the second transcript data, and the at least one keyword.

6. The meeting minutes generation system as claimed in claim 5, wherein the analysis module (213) is configured to obtain and mark the at least one keyword according to default information.

7. The meeting minutes generation system as claimed in any one of the preceding claims, wherein the storage medium (120) further stores a retrieval module (220), the processor (110) is configured to execute the retrieval module to select one of the at least one keyword according to a retrieval command, and the display device (1014) of the terminal device (101) is configured to display associated data corresponding to the one of the at least one keyword.

8. A meeting minutes generation method, adapted to a meeting minutes generation apparatus (100), wherein the meeting minutes generation apparatus (100) is configured to execute a meeting minutes processing module (210), and the method comprises:
processing (S310) meeting data and generating transcript data through the meeting minutes processing module (210);
analyzing (S320) the transcript data to generate meeting minutes data comprising at least one keyword through the meeting minutes processing module; and
providing the meeting minutes data for displaying the meeting minutes data.

9. The meeting minutes generation method as claimed in claim 8, wherein the meeting data comprises meeting image data and meeting audio data, and the method further comprises:
capturing a meeting image through an image capturing device (102), wherein the meeting image comprises a speaker image and a slide content image; and
generating the meeting image data according to the meeting image through a terminal device (101).

10. The meeting minutes generation method as claimed in claim 8 or 9, further comprising:
capturing meeting audio through an audio capturing device (103); and
generating the meeting audio data according to the meeting audio through the terminal device (101).

11. The meeting minutes generation method as claimed in claim 8, wherein a step of generating the meeting minutes data comprising the at least one keyword further comprises:
processing (S410) the meeting image data to generate first transcript data through an image processing module (102);
processing (S420) the meeting audio data to generate second transcript data through an audio processing module (103);
analyzing (S430), through an analysis module (213), the first transcript data and the second transcript data to obtain the at least one keyword from at least one of the first transcript data and the second transcript data, and marking the at least one keyword; and
generating (S440) the meeting minutes data comprising the at least one keyword according to the first transcript data, the second transcript data, and the at least one keyword through a meeting minutes data generation module (214).

12. The meeting minutes generation method as claimed in claim 11, wherein a step of marking the at least one keyword further comprises obtaining and marking the at least one keyword according to default information through the analysis module (213).

13. The meeting minutes generation method as claimed in claim 11 or 12, wherein selecting one of the at least one keyword according to a retrieval command through a retrieval module (220) for displaying associated data corresponding to the one of the at least one keyword.

14. A non-transitory processor-readable storage medium, storing a meeting minutes processing module, wherein the meeting minutes processing module (210) is accessed by a processor (110) to execute steps as follows:
processing (S310) meeting data, and generating transcript data;
analyzing (S320) the transcript data to generate meeting minutes data comprising at least one keyword; and
providing the meeting minutes data to a display device (1014) to display the meeting minutes data.

15. A terminal device, comprising:
an input device (1013);
a display device (1014);
a storage medium (1012) for storing a meeting minutes processing module (210); and
a processor (1011) electrically connected to the input device (1013), the storage medium (1012), and the display device (1014), and configured to execute the meeting minutes processing module (210),
wherein the meeting minutes processing module (210) is configured to process meeting data to generate transcript data, and the meeting minutes processing module (210) is configured to analyze the transcript data to generate meeting minutes data comprising at least one keyword,
wherein the display device (1014) is configured to display the meeting minutes data.
